(19) Europäisches Patentamt / European Patent Office / Office européen des brevets

(11) **EP 2 963 847 A1**

(12) **EUROPEAN PATENT APPLICATION**

(43) Date of publication:
06.01.2016 Bulletin 2016/01

(51) Int Cl.:
*H04B 10/516* (2013.01)     *H04B 10/556* (2013.01)

(21) Application number: **14306060.6**

(22) Date of filing: **30.06.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
- **Buchali, Fred**
  **70435 Stuttgart (DE)**
- **Leven, Andreas**
  **70435 Stuttgart (DE)**

(74) Representative: **MERH-IP Matias Erny Reichl Hoffmann**
**Patentanwälte PartG mbB**
**Paul-Heyse-Strasse 29**
**80336 München (DE)**

(54) **Method of optical data transmission using hybrid phase modulation**

(57) Proposed is a method of optical data transmission using hybrid phase modulation, comprising
- phase modulating an optical signal such that it carries a hybrid phase modulation super-symbol consisting of a sequence of N phase modulation symbols, wherein M out of the N phase modulation symbols are generated in accordance to a first phase modulation constellation scheme, and wherein the other N-M modulation symbols are generated in accordance to a second phase modulation constellation scheme having less constellation points than the first phase modulation constellation scheme,
- setting the average power of the hybrid phase modulation super-symbol in dependence on provided power data,
- setting the amplitudes of the constellation points of the first phase modulation constellation scheme and the amplitudes of the constellation points of the second phase modulation constellation scheme in dependence on an indicated amplitude ratio.

Fig. 4

Description

Field of the invention

The invention relates to a method of optical data transmission using hybrid phase modulation. Furthermore, the invention relates to a network controller for an optical transmission network as well as an optical transmitter for an optical transmission network.

Background

Optical data transmission may be carried out, by phase modulating an optical carrier signal in dependence on transmission data bits and in accordance with a chosen phase modulation method. A phase modulation method using only phase modulation is for example binary phase shift keying (BPSK) or quaternary phase shift keying (QPSK), wherein a phase modulation method using modulation of the phase as well as the amplitude is for example 16QAM. For a given phase modulation method with a corresponding phase modulation constellation scheme, this phase modulation constellation scheme is given by a number of constellations points with a respective complex values. A constellation point represents a set of transmission bits that is to be transmitted or indicated by the respective constellation point. For example, in BPSK a constellation point represents a single bit, wherein in QPSK a constellation points represent two bits, while in 16QAM a constellation point represents four bits.

In other words, for transmitting the transmission data bits, the modulation of the phase of the optical carrier signal in dependence on the transmission data and in accordance with the chosen phase modulation method with its corresponding phase modulation constellation scheme results in a sequence of phase modulation symbols. A phase modulation symbol has a complex value that depends on constellation point of the constellation scheme chosen in dependence on the transmission data bits.

When transmitting an optical signal from a transmitting to a receiving side, different artefacts may occur. A first artefact is that of noise received at the receiving side in addition to the optical transmission signal. The two physical properties of signal power and noise power are usually summarised as the signal-to-noise ratio (SNR) that the receiving side sees. With an increasing noise power, or decreasing signal-to-noise ratio, the signal transmission is more distorted and more erroneous bits are detected at the receiving side.

One approach to improve optical signal transmission is to increase the transmitted signal power at the transmitting side in order to also increase the signal-to-noise ratio that the receiver sees.

But when increasing the signal power, another artefact usually called nonlinear distortions comes into play. A nonlinear distortion may arise from the so-called Kerr effect. The greater the signal energy, the greater such distortions affect the signal. Thus, simply increasing the signal power of the transmission signal may on the one hand side achieve a higher signal-to-noise ratio but on the other hand side may also cause higher nonlinear distortions. Therefore, only increasing the signal power beyond a certain threshold is not favourable.

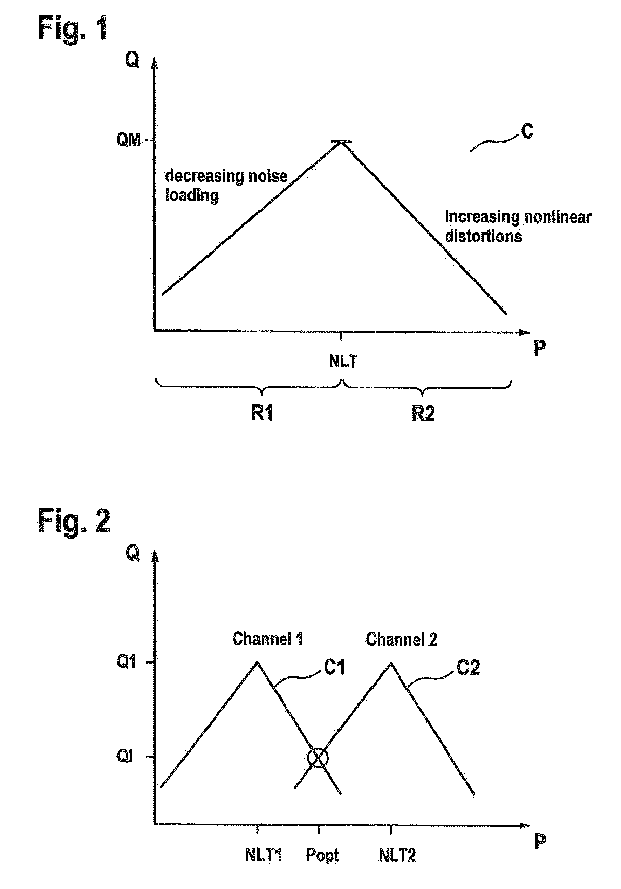

Figure 1 shows a quality curve with the ordinate showing the Q factor, which indicates a quality of the signal received at the receiving side and relates to the bit error ratio, while the abscissa shows the power P of the signal launched into the optical transmission line. The curve C is depicted for a specific assumed phase modulation method and a specific optical transmission line.

Details on the Q factor in relation to the bit error ratio are outlined in the document "Quality metrics for optical signals: Eye diagram, Q-factor, OSNR, EVM and BER" , Freude et. al., Inst. of Photonics & Quantum Electron., Karlsruhe Inst. of Technol., Karlsruhe, Germany, 14th International Conference on Transparent Optical Networks, 2-5 July 2012, ISBN 978-1-4673-2228-7'.

While in a first region R1 an increasing power P and thus an increasing SNR decreases the effect negative of noise power, there is another region R2, in which a further increase of the power P also causes an increase of the nonlinear distortions, thus leading to a decreasing of the quality Q.

At a certain power value NLT called the nonlinear threshold, the quality Q of the received signal is maximised, indicated as value QM.

The nonlinear threshold depends on the chosen phase modulation method and the given optical transmission line, which in turn is given by the optical fibre parameters, the fibre length and the noise of the amplifiers or the noise figures of the amplifiers on the transmitting optical line.

Thus, for achieving a maximised quality QM at the receiving side for the chosen phase modulation method and the given optical transmission line, the optical transmission signal should be transmitted at the transmitting side with a power P having a value indicated as NLT as the nonlinear threshold.

When transmitting an optical transmission signal in a meshed network, it may be the case, that the power P at which the optical signal is launched into the optical transmission line deviates from the ideal value NLT as the nonlinear threshold, leading to an impaired quality Q at the receiving side.

Figure 2 shows a first curve C1 indicating a quality for a received signal for a first given optical link and a first chosen phase modulation method. Furthermore, figure 2 shows a further curve C2 for another optical link, which is at least partially equal to the first optical link, as well as another phase modulation method that is possibly different to the first phase modulation method. It shall be furthermore assumed, that both optical should be transmitted at same respective optical transmission powers in order to have optical signals with equal powers present at intermediate amplifiers, such as for example erbium-doped fibre amplifiers (EDFA). For this, the power level POPT may be chosen as the respective same power levels for both optical transmission signals. In this case, a sub-optimal quality QI is achieved for both signals. In the case, that the powers for the two optical signals would be chosen to the power level NLT1 as the nonlinear threshold of the first channel, then the quality of the first signal would be maximised to Q1, but the quality of the second signal would deteriorate to a value far below its possible maximal quality. The same would apply vice versa in the case of choosing both power levels of the signals to the power level NLT2, which is the nonlinear threshold of the second signal.

A problem persists, in that any power value chosen for equal power levels of the two transmission signals always leads to signal qualities at the received side that do not both not reach their respective optimum Q1 at the same time.

## Summary

Proposed is a method of optical data transmission using hybrid phase modulation, comprising

- phase modulating an optical transmission signal such that it carries a hybrid phase modulation super-symbol consisting of a sequence of N phase modulation symbols, wherein M out of the N phase modulation symbols are generated in accordance to a first phase modulation constellation scheme, with M being smaller than N, and wherein the other N-M of the N phase modulation symbols are generated in accordance to a second phase modulation constellation scheme having less constellation points than the first phase modulation constellation scheme,
- providing power data indicating a desired average power of the hybrid phase modulation super-symbols,
- providing ratio data indicating an amplitude ratio,
- setting the average power of the hybrid phase modulation super-symbol in dependence on the power data,
- setting the amplitudes of the constellation points of the first phase modulation constellation scheme and the amplitudes of the constellation points of the second phase modulation constellation scheme in dependence on the indicated amplitude ratio.

Preferably, the first phase modulation constellation scheme and the second phase modulation constellation scheme are symmetric phase modulation constellation schemes.

Preferably, the ratio data indicates an amplitude ratio that is smaller than an amplitude ratio at which the optical data transmission of the hybrid modulation super-symbol would achieve a maximum channel capacity, and the method comprises furthermore

- setting the ratio between the average amplitude of the constellation points of the first phase modulation constellation scheme and the average amplitude of the constellation points of the second phase modulation constellation scheme to the indicated amplitude ratio.

Preferably, the method comprises furthermore,

- providing first constellation scheme data indicating a first desired phase modulation constellation scheme,
- providing second constellation scheme data indicating a second desired phase modulation constellation scheme,
- choosing the first phase modulation constellation scheme in dependence on the first constellation scheme data,
- choosing the second phase modulation constellation scheme in dependence on the second constellation scheme data.

Preferably, the method comprises furthermore,

- providing first number data indicating a first indicated number of modulation symbols,
- providing second number data indicating a second indicated number of modulation symbols,
- setting the number M of phase modulation symbols to the first indicated number of modulation symbols,
- setting the number of the other N-M phase modulation symbols to the second indicated number of modulation symbols.

Proposed is furthermore an optical transmitter for an optical transmission network, which comprises

- a network interface, operable to receive power data indicating an average optical power and furthermore operable to receive ratio data indicating an amplitude ratio,
- a phase modulation unit, operable to modulate an optical transmission signal such that it carries a hybrid phase modulation super-symbol consisting of a sequence of N phase modulation symbols,
- a control unit, configured to control the phase modulation unit

  o to generate M out of the N phase modulation symbols in accordance to a first phase modulation constellation scheme, with M being smaller than N,
  o to generate the other N-M of the N phase modulation symbols in accordance to a second phase modulation constellation scheme having less constellation points than the first phase modulation scheme,
  o to set the average power of the phase modulation super-symbol in dependence on the power data,

o and to set the amplitudes of the constellation points of the first phase modulation constellation scheme and the amplitudes of the constellation points of the second phase modulation constellation scheme in dependence on the indicated amplitude ratio.

Proposed is furthermore a network controller for an optical network according to a first embodiment, which comprises

- a network interface receiver, operable to receive quality data indicating a received quality of a signal received by a receiving node,
- a control unit, operable to track indicated received signal qualities over time and furthermore operable to determine whether an amplitude ratio between average amplitudes of constellation points of a first phase modulation constellation scheme and average amplitudes of constellation points of a second phase modulation constellation scheme should be increased or decreased,
- a network interface transmitter, operable to transmit to a transmission node, under control of the control unit,

    o ratio data indicating a request for increasing or decreasing the amplitude ratio.

Proposed is furthermore a network controller for an optical network according to a second embodiment, which comprises

- a network interface receiver, operable to receive one or more request data indicating at least

    o an optical transmission distance,
    o a first phase modulation constellation scheme and a second phase modulation constellation scheme,
    o a number N of phase modulation symbols forming a hybrid phase modulation super-symbol consisting of a sequence of N phase modulation symbols,
    o a number M of phase modulation symbols to be generated according to the first phase modulation constellation scheme, with M being smaller than N,
    o power data indicating a desired average optical power,

- a database unit containing a pre-defined look-up table that indicates for a combination of

    o an assumed transmission length,
    o an assumed optical fiber type,

o a first assumed phase modulation constellation scheme,
o a second assumed phase modulation constellation scheme,
o an assumed number N' of phase modulation symbols forming a hybrid phase modulation super-symbol,
o an assumed number M' of phase modulation symbols chosen according to the first assumed phase modulation constellation scheme,
o and an assumed average optical power,

a preferred amplitude ratio between the average amplitude of the constellation points of the first assumed phase modulation constellation scheme and the average amplitude of the constellation points of the second assumed phase modulation constellation scheme,

- a control unit, operable to determine for the desired average optical power, in dependence on the indicated combination an amplitude ratio between the average amplitude of the constellation points of the first phase modulation constellation scheme and the average amplitude of the constellation points of the second phase modulation constellation scheme, using the database,
- a network interface transmitter, operable to indicate to a transmission node, under control of the control unit CU2,

    o power data indicating the desired average optical power of the N phase modulation symbols,
    o and ratio data indicating the determined amplitude ratio.

**Brief description of the figures**

Figure 1 shows a received signal quality over an optical power for a given transmission optical link.

Figure 2 shows signal qualities for different optical signals.

Figure 3a shows a super-symbol of a hybrid phase modulation method with a first average amplitude ratio between the different symbols of the super-symbol.

Figure 3b shows a hybrid phase modulation super-symbol with a modified average amplitude ratio between the different symbols of the super-symbol.

Figure 4 shows different signal qualities for different optical signals employing respective phase modulation methods with varied average amplitudes for the different symbols.

Figure 5 shows power values for different optical transmission signals together with corresponding respective average amplitude ratios.

Figure 6 shows a proposed optical transmitter.

Figure 7 shows an interaction between an optical transmitter, an optical receiver and a network controller proposed according to a first embodiment.

Figure 8 shows the network controller proposed according to the first embodiment.

Figure 9 shows a network controller proposed according to a second embodiment.

Figure 10 shows a set of quality curves for respective, different amplitude ratios.

Figure 11 shows an embodiment of an optical transmitter, in which further steps are present between an interleaver and a modulation unit.

**Description of embodiments**

Proposed is a method of optical data transmission that uses a so-called hybrid phase modulation. A hybrid phase modulation is one, in which a so-called super-symbol consists of a sequence of N phase modulation symbols. In other words, the optical transmission signal is phase modulated, such that it carries a hybrid phase modulation super-symbol.

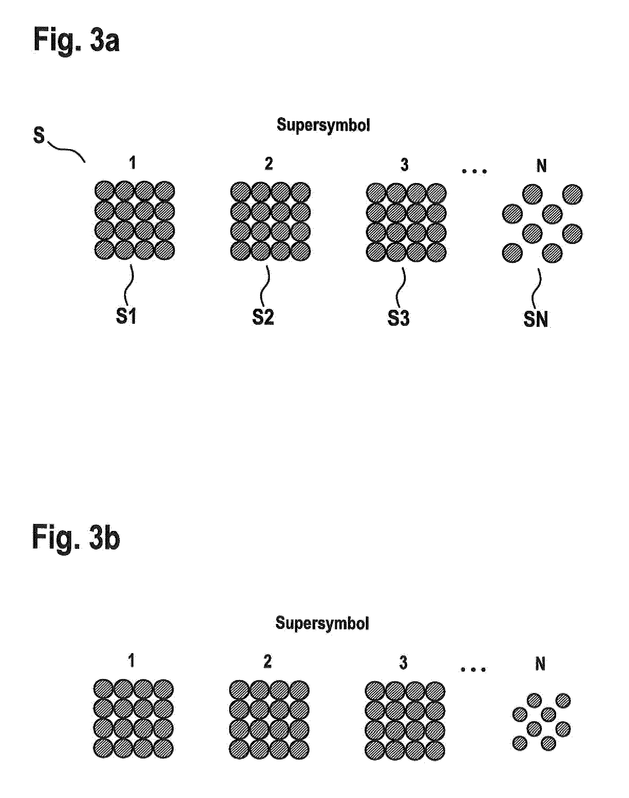

Figure 3a shows a first example of a hybrid modulation super-symbol S together with first symbols S1, S2, S3 employing a first phase modulation method and a further symbol SN employing another, second phase modulation method. Herein, the symbols are the respective phase modulation constellation schemes out of which a constellation point is to be chosen in dependence on the transmission data.

For example, the phase modulation scheme for the first N=3 symbols may be the 16QAM phase modulation scheme, while for the N-th symbol the phase modulation constellation scheme is that of 8QAM. In other words, the first phase modulation scheme has a higher number of constellation points than the second phase modulation constellation scheme.

In general, the first and the second phase modulation constellation schemes are symmetric phase modulation constellation schemes. In this example of the figure 3a, the first phase modulation constellation scheme 16QAM has a symmetry with regard to the x axis, to the y axis as well as the center of origin, while the second phase modulation constellation scheme 8QAM has a symmetry with regard to the center of origin as well as to a line indicated as line L1 in figure 3a.

In the shown example, the number of symbols within one super-symbol is equal to N = 4, wherein a number of M = 3 symbols are generated in accordance with the first phase modulation constellation scheme. The other N - M = 1 phase modulation symbols are generated in accordance with the second phase modulation constellation scheme.

For any given number of N phase modulation symbols forming a super-symbol, the super-symbol consists of a set of first M phase modulation symbols and further N - M phase modulation symbols can be found or proposed. The choice of N = 4 and M = 3 in Figure 3a is only exemplarily.

The first phase modulation constellation scheme contains a number of P constellation points, while the second phase modulation constellation scheme contains a number of Q constellation scheme points. Thus, for a given number of P constellation points of the first modulation method with respective indices $i$ =1,..., P as well as respective amplitudes $A_i^I$, the average amplitude $A^I$ of the constellation points of this first phase modulation constellation scheme is given as

$$A^I = \frac{\sum_{i=1}^{P} \left| A_i^I \right|}{P} \ .$$

For a number of Q constellation points of the second modulation method with index $i$ =1, ..., Q and respective amplitudes $A_i^{II}$, the average amplitude $A^{II}$ of the constellation points of this second phase modulation constellation scheme is given as

$$A^{II} = \frac{\sum_{i=1i}^{Q} \left| A^{II} \right|}{P} \ .$$

The ratio $R$ between the average amplitude $A^I$ of the constellation points of the first phase modulation scheme and the average amplitude $A^{II}$ of the constellation points of the second phase modulation constellation scheme is then given as

$$R = \frac{A^I}{A^{II}} \ .$$

For the constellation points of the constellation schemes as indicated in figure 3a the ratio R has a value equal to 1. This will be addressed later on below.

Taking into consideration a average power $P^I$

of the phase modulation symbols of the first phase modulation method as

$$P^I = \frac{\sum_{i=1}^{P} \left| A_i^I \right|^2}{P}$$

as well as a average power $P^{II}$ of the second phase modulation method as

$$P^{II} = \frac{\sum_{i=1}^{Q} \left| A_i^{II} \right|^2}{Q},$$

then the average power $P_D$ of the N phase modulation symbols forming the hybrid phase modulation super-symbol is given as

$$P_D = \frac{M \cdot P_I + (N - M) \cdot P_{II}}{N}.$$

The mean or average power $P_D$ of the hybrid phase modulation super-symbol formed by the N phase modulation symbols relates to the optical power of the optical transmission signal launched into the optical fibre.

According to the proposed method, power data is provided, which indicates a desired average power of the hybrid phase modulation super-symbol.

Furthermore, ratio data is provided that indicates a desired amplitude ratio between the average amplitude of the constellation points of the first phase modulation constellation scheme and the average amplitude of the constellation points of the second phase modulation constellation scheme.

Preferably, the above-mentioned ratio data and power data is provided, in that a transmitting node receives such data via a network interface.

A control unit as an internal element of the transmitting node then uses the provided data for two purposes.

The first purpose is to set the average power of the phase modulation hybrid super-symbol in dependence on the provided power data. The second purpose is to set the amplitudes of the constellation points of the first and the second phase modulation constellation scheme in dependence on the indicated amplitude ratio.

The ratio data indicates a desired amplitude ratio, defined above as

$$R = \frac{A^I}{A^{II}}.$$

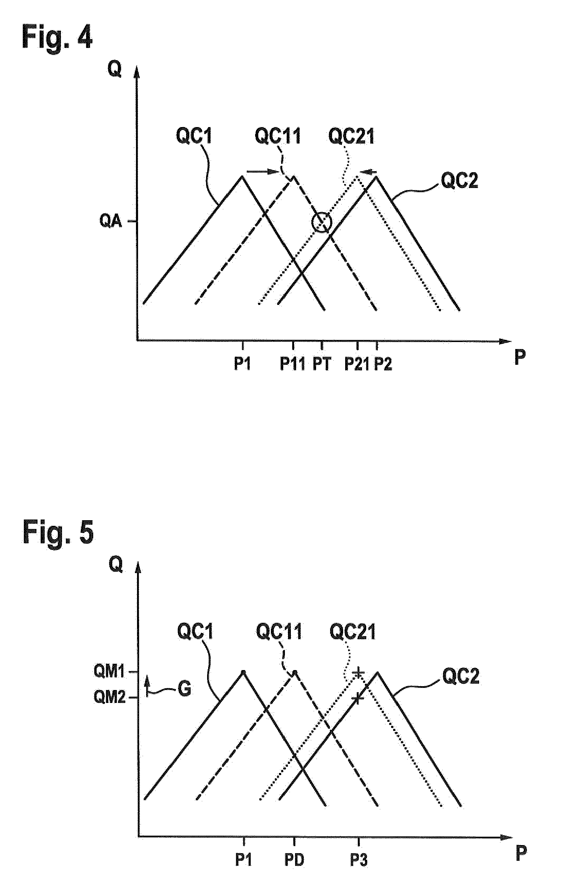

The amplitude ratio is smaller than an amplitude ratio, at which the optical data transmission of the hybrid modulation super-symbol would achieve a maximum channel capacity. Such a choice for the value of the amplitude ratio does not aim at maximising a data transmission capacity, but aims at achieving a different effect, which is described in detail later on with regard to figure 4 .

The ratio between the average amplitude of the constellation points of the first phase modulation constellation scheme and the average amplitude of the constellation points of the second phase modulation constellation scheme is set to the indicated amplitude ratio.

It shall be assumed, that during a first time interval data transmission is carried out using a first hybrid modulation, for example one as illustrated in figure 3a. At a next time interval, data transmission is carried out using hybrid modulation as illustrated in figure 3b, with the amplitude ratio $R$ and the average power $P_D$ being set in dependence on ratio data and power data received at the transmitting node.

In figure 3b an example of a super-symbol is shown, for which the average amplitude of the constellation points of the second phase modulation constellation scheme for the N-th symbol is decreased in order to achieve an indicated amplitude ratio $R$, which in this example is smaller than the amplitude ratio for the different symbols given in Figure 1a. Such setting with a decrease of the average amplitude of the constellation points of the second phase modulation constellation scheme is not the only possible choice in this case. Another possible choice would be to increase the average amplitude of the constellation points of the first phase modulation constellation scheme. A further possible choice would be to increase the average amplitude of the constellation points of the first phase modulation constellation scheme and to also decrease the average amplitude of the constellation points of the second phase modulation constellation scheme. One of the choices mentioned above is possible, as long as the desired indicated amplitude ratio $R$ is met and as long as the desired average power $P_D$ of the hybrid phase modulation super-symbol is met.

The effect achieved by the above described method with the ratio $R$ being smaller than an amplitude ratio at which the optical data transmission of said hybrid modulation super-symbol would achieve a maximum channel capacity is now described in detail with regard to figure 4.

It shall be assumed, that when transmitting optical data via hybrid phase modulation during a first time interval, the resulting corresponding quality curve QC1 may have a maximised quality for a power value such as P1. In the case, that the amplitudes of the constellation points for the first and the second phase modulation constellation schemes are varied as described above, this may result in a modified quality curve QC11, for which a maximised quality is achieved for a power value P11. In other words, by setting differently the amplitudes for the hybrid super-symbol, for example from the super-symbol of figure 3a to the super-symbol of figure 3b, a shift of the quality curve from the curve QC1 to the curve QC11 can be achieved.

The same principle may be applied for another optical transmission signal with another hybrid phase modulation method. For example, the quality curve QC2 shows a maximised quality at a power level P2. When for example changing for this other optical transmission signal the respective hybrid phase modulation super-symbol, a shift of the quality curve QC2 to yield the curve QC21 may be achieved. The curve QC21 has a maximised quality for the power level P21.

When now transmitting both optical signals with respective average amplitude of the constellation points meeting the indicated ratio $R$ yielding the quality curves QC11 and QC21 and furthermore transmitting both signals with hybrid super-symbols at the average power level PT, then a quality QA may be achieved for both these optical transmission signals at the receiving sides. This quality QA could not be achieved, in the case that the two signals would be transmitted with an unchanged averaged amplitudes and unchanged average power levels of their hybrid super-symbols leading to the quality curves QC1 and QC2.

Thus, the above described method allows to vary for an optical transmission signal the average power of the hybrid phase modulation super-symbol and also the average amplitude of the constellation points between the constellation schemes forming the super-symbol, in order to achieve an increased quality of a received signal at a desired power level.

This is illustrated once more in figure 5 with a different example. If, for example, a first signal is transmitted by a specific hybrid phase modulation method resulting in the curve QC1 at a power P1 achieving a quality QM1, then a request for a change of the average power to a desired power level PD may have to be complied with, for example due to different loads of channels being present in the network at one or more specific EDFA amplifiers. This is feasible in the proposed method, wherein the quality level QM1 is maintained by setting not only the average power level as desired but by also setting the ratio between the average amplitude of the constellation points to an indicated amplitude ratio that yields the quality curve QC11.

In another example, another optical signal with another hybrid phase modulation method is transmitted with an average power level P3 yielding the quality curve QC2 and the quality level QM2. Using the proposed method, the optical signal can be transmitted at the power level P3 with another, modified amplitude ratio, yielding a quality of the received signal as QM1. The gain G in terms of quality is then QM1-QM2.

Preferably, a central node, such as a network controller, indicates to a transmitting node the ratio data and the power data via a control plane or a network management plane.

Thus, it becomes possible for a transmitting node to perform a setting of the amplitude ratio and a setting of the average power level, which is under control of a central node.

The proposed transmitter can be used in a scenario, in which an optical amplifier, such as an EDFA, present along the optical transmission link, should be loaded with an overall constant optical power. This power is given by the W different optical transmission signals present at the input of the EDFA. The signals may have same respective optical powers $P_{CH}$. For example, the overall optical signal power present at the input of the EDFA is then

$$P_{LOAD} = W \cdot P_{CH}.$$

In the case, that at a later point of time an additional optical signal with the power $P_{CH}$ is present at the input of the EDFA, then the overall optical power at the input would be increased to $P_{LOAD}$'. This is not favourable for amplifiers such as EDFAs and therefore, the overall optical power should be kept constant. Thus, the W + 1 different signals should rather have respective optical powers $P_{CH}$' as

$$P_{CH}' = \frac{P_{LOAD}}{W + 1}$$

This new power value $P_{CH}$' should then be the power level, at which the respective transmitters generate the respective optical signals. The possible shift of quality curves, as previously described in detail above, can then be compensated for, by also determining new average amplitude ratios of the hybrid super-symbols for the respective optical signals. Thus, the central node is able to control the above described scenario, by indicating the ratio data and the power data to the one or more transmitting nodes.

Furthermore, the central node may indicate to the transmitting node a first desired phase modulation constellation scheme, wherein the transmitting node then chooses as the first phase modulation constellation scheme of the hybrid phase modulation method the indicated first desired phase modulation constellation scheme.

Furthermore, the central node may indicate to the transmitting node a second desired phase modulation constellation scheme, wherein the transmitting node then chooses as the second phase modulation constellation scheme of the hybrid phase modulation method the indicated second desired phase modulation constellation scheme.

Thus, it becomes possible for a transmitting node to perform hybrid phase modulation with respective first and second phase modulation methods having respective first and second phase modulation constellation schemes, which are under control of the central node.

Furthermore, the central network node may provide number data that indicates a first number of modulation symbols and a second number of modulation symbols. The transmitting node then sets for its hybrid phase modulation method the number M of phase modulation symbols generated in accordance with the first phase modulation constellation scheme to the first indicated number of modulation symbols. Furthermore, the node sets the number of the other N - M phase modulation symbols of the hybrid phase modulation super-symbol to the second indicated number of modulation symbols. Thus, it becomes possible, that the central network controller also controls the number of sub-symbols generated according to the first or the second phase modulation scheme respectively.

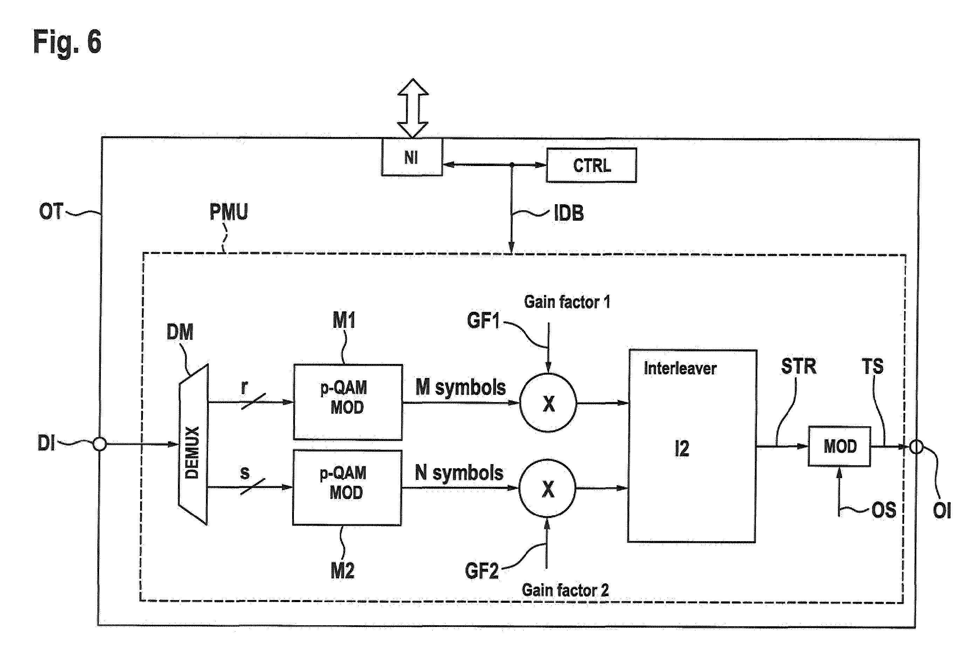

Figure 6 shows a proposed optical transmitter OT, which contains a network interface NI, a control unit CTRL and a phase modulation unit PMU.

The optical transmitter OT receives transmission data via a data interface DI. The final resulting transmission sequence TS of phase modulation symbols is transmitted as a phase modulated optical signal via an optical interface OI into an optical transmission link. The network interface NI is operable to receive data from a network controller via a control plane or a network management plane. The network interface NI is coupled to the control unit and the modulation unit PMU via an internal data bus IDB.

The network interface is operable to receive power data that indicates an average power and also ratio data indicating an amplitude ratio.

The phase modulation unit PMU is operable to modulate an optical transmission signal OS, such that it carries a hybrid phase modulation super-symbol consisting of a sequence of N phase modulation symbols.

The control unit CTRL is configured to control a phase modulation unit PMU, such that it modulates an optical carrier signal OS, such that it generates M out of the N phase modulation symbols in accordance with a first phase modulation constellation scheme. Herein, M is a number smaller than N.

The control unit CTRL is furthermore configured to control the modulation unit PMU to modulates the optical carrier signal OS, such that it generates the other N - M of the N phase modulation symbols in accordance with a second phase modulation constellation scheme having less constellation points than the first phase modulation scheme.

Furthermore, the control unit CTRL is configured to control the phase modulation unit PMU, such that it sets the average power of the phase modulation hybrid super-symbol in dependence on the indicated power data.

Finally, the control unit CTRL is configured to control the phase modulation unit PMU, such that it sets the amplitudes of the constellation points of the first phase modulation constellation scheme and the amplitudes of the constellation points of the second phase modulation constellation scheme in dependence on the indicated amplitude ratio.

As previously described above, the first phase modulation constellation scheme and the second phase modulation constellation scheme are symmetric phase modulation constellation schemes.

In detail, the control unit CTRL is configured to control the phase modulation unit PMU, such that it sets the ratio between the average amplitude of the constellation points of the first phase modulation constellation scheme and the average amplitude of the constellation points of the second phase modulation constellation scheme to the indicated amplitude ratio.

Via the interface NI, the transmitter OT receives preferably from the network controller first constellation scheme data indicating a first desired phase modulation constellation scheme, as well as second constellation scheme data indicating a second desired phase modulation constellation scheme. This data is then provided to the control unit CTRL.

The control unit CTRL is configured to choose the first phase modulation constellation scheme in dependence on the first constellation scheme data, and furthermore to choose the second phase modulation constellation scheme in dependence on the second constellation scheme data.

Via the interface NI, the transmitter OT receives preferably from the network controller first number data indicating a first indicated number of modulation symbols, as well as second number data indicating a second indicated number of modulation symbols. The control unit is configured to control the phase modulation unit PMU, such that the phase modulation unit PMU sets the number M of phase modulation symbols to the first indicated number of modulation symbols and furthermore set the number of the other N-M phase modulation symbols to the second indicated number of modulation symbols.

The modulation unit PMU receives the incoming data stream and de-multiplexes it into blocks of R and S bits, using a de-multiplexer DM.

In a first mapping unit M1, the modulation unit PMU generates a number of M phase modulation symbols in dependence on the data of the blocks of size R and in accordance with the first phase modulation method with the respective constellation scheme having a number of P constellation points.

In another mapping unit M2, the modulation unit PMU generates a number of N - M symbols in dependence on the bits of the blocks of size S and in accordance with the second phase modulation method with the respective constellation scheme having a number of Q constellation points.

The M symbols are then scaled by a first gain factor GF1, while the N - M symbols are scaled by another gain factor GF2. Preferably, the first gain factor is chosen equal to 1, while the second gain factor GF2 is chosen equal to the desired amplitude ratio.

An interleaver IL then interleaves the different symbols into the stream STR of modulation symbols forming hybrid modulation super-symbols, as previously described above.

Finally, the resulting symbol stream STR is used in a modulation device MOD for phase modulating the optical carrier signal OS, which yields optical the transmission signal TS.

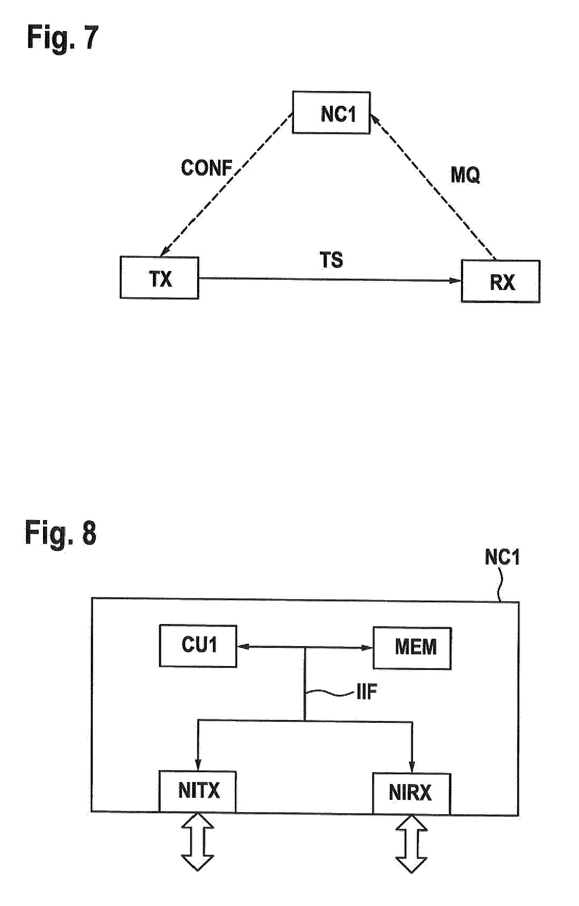

Figure 7 shows a concept, in which a transmitter TX transmits the optical transmission signal TS over an optical fibre link to the receiver RX. The receiver RX is able to determine from the received signal a measured quality.

The receiver RX transmits to a network controller NC1 quality data MQ, which indicates the received quality of the signal TS. The network controller NC1 is shown in detail in figure 8 and will be described in detail further below.

The network controller NC1 indicates to the transmitting node TX configuration data CONF, which contains at least the previously mentioned ratio data. The configuration data CONF indicates a request for increasing or decreasing the amplitude ratio between the average amplitude of the constellation points of the first phase modulation constellation scheme and the average amplitude of the constellation points of the second phase modulation constellation scheme.

The transmitter TX then sets, or modifies, the amplitudes of the constellation points according to the indicated amplitude ratio. This will result at a later point of time in a new measured quality value measured at the receiver RX.

The network controller NC1 is thus able to control via the indicated configuration data CONF the quality of the signal received at the receiver RX in an iterative manner. This is achieved, in that at consecutive time instances respective configuration data CONF with respective, different indicated amplitude ratios is transmitted by the controller NC1 to the transmitter TX.

Figure 8 shows the controller NC1 in more detail. A network interface receiver NIRX is able to receive the quality data MQ sent by the receiver RX to the controller NC1. The quality data indicates the received quality of the signal received by the receiving node RX.

The controller NC1 contains furthermore a control unit CU1, which is able to track indicated received signal qualities over time. The control unit CU1 controls a network interface transmitter NITX, that is able to indicate to the transmitting node TX of figure 8 the configuration data CONF. The configuration data CONF contains at least the amplitude ratio data indicating a request for increasing or decreasing the amplitude ratio at the transmitter.

The different devices CU1, MEM, NITX and NIRX are interconnected by an internal interface IIF.

A first measurement value of the signal quality may be received via the quality data MQ at a first time instance at the receiver BRX. This first measurement value is tracked by the control unit CU1, preferably using a memory unit MEM. The control unit CU1 controls the network interface transmitter NITX to indicate to the transmitting node configuration data containing ratio data that indicates a request for increasing the amplitude ratio of the hybrid modulation super-symbol generated at the transmitting node.

At a second time instance of measurement, a next, second value of signal quality data may be received via the quality data MQ. This quality data may indicate for example an increased received quality in comparison to the indicated received quality of the first time instance. Thus, the control unit continues in a next iteration step, by controlling the network interface transmitter NITX, such that it transmits to the transmission node configuration data containing ratio data that indicates a request for further on increasing the amplitude ratio.

In the case, that at the second time instance a signal quality is indicated, which is lower than the signal quality indicated at the first time instance, then the control unit continues in the next step to control the network interface transmitter NITX, such that it transmits to the transmission node configuration data containing ratio data that indicates a request for decreasing the amplitude ratio.

Thus, an iterative procedure can be carried out by the network controller NC1 in an iterative manner, for controlling the quality of the signal received at the receiving node RX by means of the configuration data sent by the controller NC1 to the transmitting node TX.

To summarise the above, the control unit CU1 of the network controller NC1 is able to track indicated received signal qualities over time. The control unit CU1 is furthermore able to determine, whether an amplitude ratio between average amplitudes of constellation points of the first phase modulation constellation scheme and average amplitudes of constellation points of the second phase modulation constellation scheme forming the hybrid phase modulation super-symbol should be increased or decreased. Furthermore, the network interface transmitter is able to transmit to the transmission node under control of the control unit CU1 the mentioned configuration data containing at least ratio data, that indicates the request for increasing or decreasing the amplitude ratio.

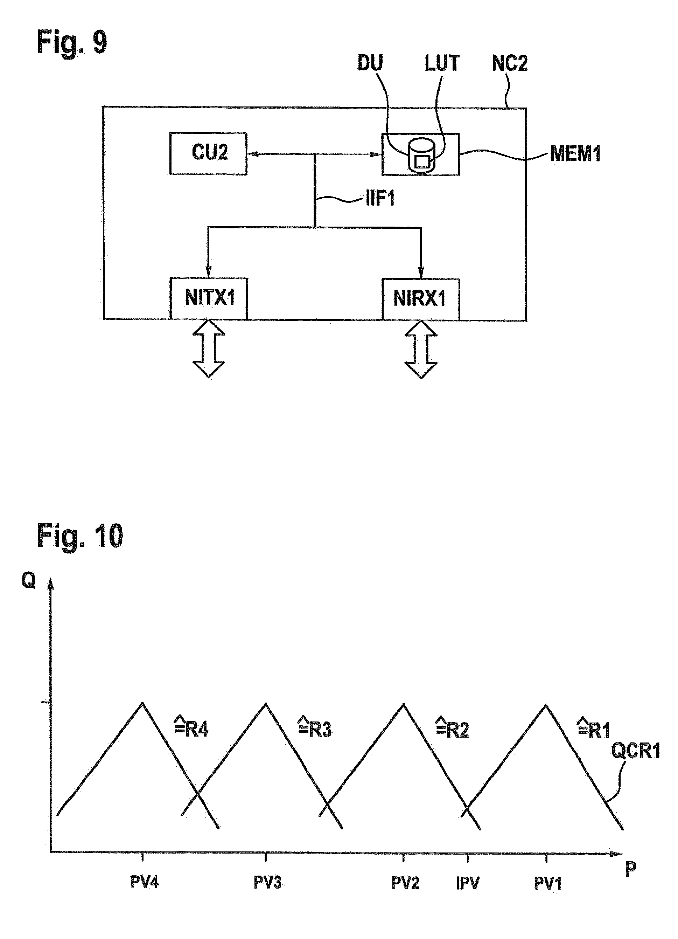

Figure 9 shows a further embodiment of the network controller NC2.

The network controller NC2 comprises a network receiver NIRX1, that is able to receive one or more request data elements. The one or more request data elements indicate for a specific, desired optical transmission connection an optical transmission distance as well as a first phase modulation constellation scheme and a second phase modulation constellation scheme. Furthermore, the one or more request data elements indicate a number N of phase modulation symbols that shall form a hybrid or the hybrid phase modulation super-symbol. Furthermore, the one or more request data indicates a number M of phase modulation symbols that are to be generated according to the first phase modulation constellation scheme, wherein M is a number smaller than N.

Furthermore, the one or more request data indicate power data that indicates a desired average power of the hybrid phase modulation super-symbol.

The one or more request data is possibly received at the network controller NC2 from a supervising element or a network manager supervising the optical network.

The network controller NC2 contains a memory element MEM1 with a database unit DU. The database unit DU contains a predefined look-up table that indicates for a combination of

- a transmission length
- an optical fiber type
- a first assumed phase modulation constellation scheme,
- a second assumed phase modulation constellation scheme,
- an assumed number N' of phase modulation symbols forming the hybrid phase modulation super-symbol,
- an assumed number M' of modulation symbols chosen according to the first assumed phase modulation constellation scheme
- and an assumed average power

a preferred amplitude ratio between the average amplitude of the constellation points of the first assumed phase modulation constellation scheme and the average amplitude of the constellation points of the second assumed phase modulation constellation scheme.

Figure 10 shows an example of an assumed average power PV1 for a specific combination of parameters mentioned above. The indicated preferred amplitude ratio R1 is the one, for which the quality curve QCR1 achieves its maximum value at the average power PV1. Further average power values PV2, PV3, PV4 may be stored in the database unit within the look-up table LUT together with respective preferred amplitude ratios R2, R3, R4 for the specific combination of parameters.

For other combinations of parameters, other average power values with other preferred amplitude ratios may be stored in the look-up table. Thus, the table LUT may contain for different combinations of parameters respective entries indicating a respective preferred amplitude ratio. Therefore, the table LUT can be used to determine for different optical signals with respective different, individual combinations of parameters the respective, different amplitude ratios.

Coming back to figure 10, the control unit CU2 determines for the desired average power in dependence on the indicated combination of parameters an amplitude ratio between the average amplitude of the constellation points of the first phase modulation constellation scheme and the average amplitude of the constellation points of the second phase modulation constellation scheme, using the look-up table LUT of the database DU. The control unit CU retrieves for the given combination of parameters together with the desired average power value PV1 the corresponding ratio value R1 from the table LUT.

In the case, that the desired average power as an exact specific value is store in an entry of the table LUT, the corresponding ratio value R1 can be directly retrieved from the table LUT.

The network controller NC2 contains furthermore a network interface transmitter NITX2, which is able to indicate to the transmission node, under control of the controlling unit CU2, power data indicating the desired average power of hybrid phase modulation symbol as well as ratio data indicating the retrieved amplitude ratio.

In the case, that a desired average power IPV indicated by the power data of the request data received at the controller NC2 is not exactly present as an entry in the look-up table LUT, the control unit CU2 retrieves for such a desired average power value IPV the next neighbouring power values PV1 and PV2 together with the respective ratio entries R1 and R2. The amplitude ratio $R_{ind}$ that shall then be indicated to the transmitting node may then be determined as

$$R_{ind} = \frac{R1 + R2}{2} \quad .$$

Also in this case, the control unit determines for the desired average power IPV in dependence on the indicated combination of parameters an amplitude ratio between the average amplitude of the constellation points of the first phase modulation constellation scheme and the average amplitude of the constellation points of the second phase modulation constellation scheme, using the look-up table LUT of the database DU.

The advantage of a network controller NC2 as shown in figure 9 is, that for a given combination of parameters, the network controller NC1 is able to determine via its control unit CU2 for a desired average power a corresponding amplitude ratio between the average amplitude of the constellation points of the first phase modulation constellation scheme and the average amplitude of the constellation points of the second phase modulation constellation scheme. The control unit CU2 does so, by simply reading the desired ratio data out from the looup table LUT of the database unit DU.

The database unit DU contains a predefined look-up table LUT in the sense, that the entries present in the look-up table LUT are present in the look-up table before the request data is received at the receiver NIRX1 of the controller NC2.

Preferably, entries of the look-up table have been previously generated using measured values.

The common concept of the network controller NC1 and the network controller NC2 lies in the fact, that via indicating to the transmission node ratio data indicating the request related to the determined amplitude ratio, the network controller NC1 or NC2 is able to control the quality of the received signal received at the receiving side.

This is done, by simply requesting a modification of the amplitude ratio between the average amplitude of the constellation points of the first phase modulation constellation scheme and the average amplitude of the constellation points of the second phase modulation constellation scheme.

Coming back to figure 6, it is to be mentioned that the interleaver IL generates a stream STR of modulation symbols in the discrete electrical domain. These symbols are to be converted from the discrete electrical to the analogue electrical domain, using a digital analogue converter DAC, before using the analogue electrical signal for modulating the optical signal OS within the modulation unit MOD.

Although the digital analogue converter DAC is not explicitly shown in figure 6, it is clear for a person skilled in the art, that such a device for digital analogue conversion has to be present between the interleaver IL and the modulation unit MOD.

A problem possibly occuring is, that when varying the amplitudes of the constellation points of the constellation schemes, the digital analogue converter DAC may not be able to realise a conversion of digital modulation symbol values with an infinite step size, but rather faces a quantisation problem causing an affection of the resulting analogue electrical signal and thus an affection of the phase modulated optical signal with artifacts.

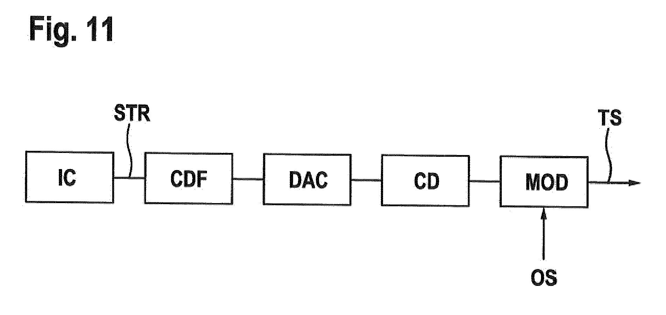

Therefore, figure 11 shows a further embodiment, in which further steps are present between the interleaver IL and the modulation unit MOD.

As previously mentioned, the interleaver IL provides a stream STR of discrete electrical symbol values. Next following is a chromatic dispersion filter CDF, which can be implemented in the time domain as a finite pulse response filter FIR or via a frequency transform such as the fast Fourier transform (FFT) in the frequency domain followed by a discrete spectral weighting function. Such a chromatic dispersion filter CDF is usually an all pass filter. The all pass filter will achieve a smearing of signal energy for the different modulation symbols over time. The filter operates preferably at the symbol rate.

Next following is the digital analogue converter DAC. Due to the fact, that the signal energy of the modulation symbols is smeared over time by the chromatic dispersion filter CDF, the power difference between the different modulation symbols is smaller than when not using the chromatic dispersion filter CDF. Thus, also quantisation problems caused by the digital analogue converter DAC are decreased. After digital analogue conversion via the device DAC, a chromatic dispersion device CD follows. The device CD is a fibre causing a dispersion that is inverse (or negative) with respect to the dispersion caused by the filter CDF.

The resulting signal analogue electrical is then provided to the modulation unit MOD

The functions of the various elements shown in the different figure, including any functional blocks labeled as 'control unit' or 'controller', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'control unit' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

**Claims**

1. Method of optical data transmission using hybrid phase modulation,
   comprising

   - phase modulating an optical transmission signal such that it carries a hybrid phase modulation super-symbol consisting of a sequence of N phase modulation symbols, wherein M out of said N phase modulation symbols are generated in accordance to a first phase modulation constellation scheme, with M being smaller than N, and wherein the other N-M of said N phase modulation symbols are generated in accordance to a second phase modulation constellation scheme having less constellation points than said first phase modulation constellation scheme,
   - providing power data indicating a desired average power of said hybrid phase modulation super-symbols,
   - providing ratio data indicating an amplitude ratio,
   - setting the average power of said hybrid phase modulation super-symbol in dependence on said power data,
- setting the amplitudes of the constellation points of said first phase modulation constellation scheme and the amplitudes of the constellation points of said second phase modulation constellation scheme in dependence on said indicated amplitude ratio.

2. Method according to claim 1,
   wherein said first phase modulation constellation scheme and said second phase modulation constellation scheme are symmetric phase modulation constellation schemes.

3. Method according to claim 1,
   wherein said ratio data indicates an amplitude ratio that is smaller than an amplitude ratio at which the optical data transmission of said hybrid modulation super-symbol would achieve a maximum channel capacity,
   comprising furthermore

   - setting the ratio between the average amplitude of the constellation points of said first phase modulation constellation scheme and the average amplitude of the constellation points of said second phase modulation constellation scheme to said indicated amplitude ratio.

4. Method according to claim 1,
   comprising furthermore,

   - providing first constellation scheme data indicating a first desired phase modulation constellation scheme,
   - providing second constellation scheme data indicating a second desired phase modulation constellation scheme,
   - choosing said first phase modulation constellation scheme in dependence on said first constellation scheme data,
   - choosing said second phase modulation constellation scheme in dependence on said second constellation scheme data.

5. Method according to claim 1,
   comprising furthermore,

   - providing first number data indicating a first indicated number of modulation symbols,
   - providing second number data indicating a second indicated number of modulation symbols,
   - setting said number M of phase modulation symbols to said first indicated number of modulation symbols,
   - setting the number of said other N-M phase modulation symbols to said second indicated number of modulation symbols.

6. Optical transmitter for an optical transmission network,
   comprising

   - a network interface, operable to receive power data indicating an average optical power and furthermore operable to receive ratio data indicating an amplitude ratio,
   - a phase modulation unit, operable to modulate an optical transmission signal such that it carries a hybrid phase modulation super-symbol consisting of a sequence of N phase modulation symbols,
   - a control unit, configured to control said phase modulation unit

     o to generate M out of said N phase modulation symbols in accordance to a first phase modulation constellation scheme, with M being smaller than N,
     o to generate the other N-M of said N phase modulation symbols in accordance to a second phase modulation constellation scheme having less constellation points than said first phase modulation scheme,
     o to set the average power of said phase modulation super-symbol in dependence on said power data,
     o and to set the amplitudes of the constellation points of said first phase modulation constellation scheme and the amplitudes of the constellation points of said second phase modulation constellation scheme in dependence on said indicated amplitude ratio.

7. Network controller for an optical network,
   comprising

   - a network interface receiver, operable to receive quality data indicating a received quality of a signal received by a receiving node,
   - a control unit, operable to track indicated received signal qualities over time and furthermore operable to determine whether an amplitude ratio between average amplitudes of constellation points of a first phase modulation constellation scheme and average amplitudes of constellation points of a second phase modulation constellation scheme should be increased or decreased,
   - a network interface transmitter, operable to transmit to a transmission node, under control of said control unit,

     o ratio data indicating a request for increasing or decreasing said amplitude ratio.

**8.** Network controller for an optical network, comprising

    - a network interface receiver, operable to receive one or more request data indicating at least

        o an optical transmission distance,
        o a first phase modulation constellation scheme and a second phase modulation constellation scheme,
        o a number N of phase modulation symbols forming a hybrid phase modulation super-symbol consisting of a sequence of N phase modulation symbols,
        o a number M of phase modulation symbols to be generated according to said first phase modulation constellation scheme, with M being smaller than N,
        o power data indicating a desired average optical power,

    - a database unit containing a pre-defined look-up table that indicates for a combination of

        o an assumed transmission length,
        o an assumed optical fiber type,
        o a first assumed phase modulation constellation scheme,
        o a second assumed phase modulation constellation scheme,
        o an assumed number N' of phase modulation symbols forming a hybrid phase modulation super-symbol,
        o an assumed number M' of phase modulation symbols chosen according to said first assumed phase modulation constellation scheme,
        o and an assumed average optical power,
        a preferred amplitude ratio between the average amplitude of the constellation points of said first assumed phase modulation constellation scheme and the average amplitude of the constellation points of said second assumed phase modulation constellation scheme,

    - a control unit, operable to determine for said desired average optical power, in dependence on the indicated combination an amplitude ratio between the average amplitude of the constellation points of said first phase modulation constellation scheme and the average amplitude of the constellation points of said second phase modulation constellation scheme, using said database,
    - a network interface transmitter, operable to indicate to a transmission node, under control of the control unit CU2,

        o power data indicating said desired average optical power of said N phase modulation symbols,
        o and ratio data indicating said determined amplitude ratio.

# Fig. 1

Q

QM —

decreasing noise
loading

Increasing nonlinear
distortions

C

NLT

P

R1     R2

# Fig. 2

Q

Channel 1     Channel 2

Q1 —

C1     C2

QI —

⊗

NLT1   Popt   NLT2     P

# Fig. 3a

**Supersymbol**

S

1      2      3    ...    N

S1     S2     S3     SN

# Fig. 3b

**Supersymbol**

1      2      3    ...    N

# Fig. 4

# Fig. 5

Fig. 6

## Fig. 7

## Fig. 8

**Fig. 9**

**Fig. 10**

# Fig. 11

Europäisches
Patentamt

European
Patent Office

Office européen
des brevets

# EUROPEAN SEARCH REPORT

Application Number

EP 14 30 6060

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CURRI V ET AL: "Time-division hybrid modulation formats: Tx operation strategies and countermeasures to nonlinear propagation", OFC 2014, OSA, 9 March 2014 (2014-03-09), pages 1-3, XP032633416, DOI: 10.1109/OFC.2014.6886929 [retrieved on 2014-08-27] | 1-6,8 | INV. H04B10/516 H04B10/556 |
| A | * the whole document * | 7 | |
| A | EP 2 747 311 A1 (ALCATEL LUCENT [FR]) 25 June 2014 (2014-06-25) * paragraph [0006] * * paragraphs [0023] - [0024] * * paragraphs [0028] - [0029] * * paragraphs [0032] - [0033] * * figures 1,2 * | 1-8 | |
| X | US 5 623 355 A (OLSEN JAMES J [US]) 22 April 1997 (1997-04-22) * figures 1,2 * * column 2, lines 50-60 * * column 3, lines 6-48 * | 7 | TECHNICAL FIELDS SEARCHED (IPC) H04B |

The present search report has been drawn up for all claims

| Place of search | Date of completion of the search | Examiner |
|---|---|---|
| Munich | 19 March 2015 | Petitit, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 14 30 6060

The Search Division considers that the present European patent application does not comply with the requirements of unity of invention and relates to several inventions or groups of inventions, namely:

1. claims: 1-6, 8

   Means and method for modulating on an optical carrier according to a first phase modulation scheme on a first set of successive symbols and to a second phase modulation scheme on a second set of successive symbols based on the average power and the amplitude ratio of the modulation schemes.

   ---

2. claim: 7

   Network interface operable to track received signal quality and to determine if the amplitude ratio between the first and second modulation schemes average amplitude should be modified according to the tracked signal quality.

   ---

**ANNEX TO THE EUROPEAN SEARCH REPORT
ON EUROPEAN PATENT APPLICATION NO.**

EP 14 30 6060

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2015

| Patent document cited in search report | | Publication date | Patent family member(s) | | Publication date |
|---|---|---|---|---|---|
| EP 2747311 | A1 | 25-06-2014 | EP | 2747311 A1 | 25-06-2014 |
| | | | WO | 2014095445 A1 | 26-06-2014 |
| US 5623355 | A | 22-04-1997 | US | 5623355 A | 22-04-1997 |
| | | | WO | 9508879 A1 | 30-03-1995 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **FREUDE.** Quality metrics for optical signals: Eye diagram, Q-factor, OSNR, EVM and BER. *Inst. of Photonics & Quantum Electron., Karlsruhe Inst. of Technol., Karlsruhe, Germany, 14th International Conference on Transparent Optical Networks,* 02 July 2012, ISBN 978-1-4673-2228-7